**Europäisches Patentamt**

**European Patent Office**

**Office européen des brevets**

(19)

(11) Veröffentlichungsnummer: **0 253 106**
**A1**

# (12) EUROPÄISCHE PATENTANMELDUNG

(21) Anmeldenummer: **87107536.2**

(22) Anmeldetag: **23.05.87**

(51) Int. Cl.⁴: **B65H 1/12**

(30) Priorität: **17.07.86 DE 3624128**

(43) Veröffentlichungstag der Anmeldung:
**20.01.88 Patentblatt 88/03**

(84) Benannte Vertragsstaaten:
**BE DE ES FR GB IT**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Riedl, Günther**
**Am Anger 5**
**D-8195 Egling(DE)**

(54) **Verfahren zur Parallelausrichtung.**

(57) Die Erfindung bezieht sich auf ein Verfahren zur Parallelausrichtung mehrerer optischer Achsen (13) eines optronischen Visiers (10) mit Richt-oder Stabilisierungsspiegel (11) unter Verwendung der Autokollimation, bei dem zur Achsharmonisierung der geräteeigene Richtspiegel verwendet wird. Ausführungsbeispiele sind beschrieben und erläutert.

FIG. 2

EP 0 253 106 A1

## Verfahren zur Parallelausrichtung.

Die Erfindung bezieht sich auf ein Verfahren zur Parallelausrichtung mehrerer optischer Achsen eines optronischen Visiers mit Richt-oder Stabilisierungsspiegel.

Es ist bekannt, daß einen Kollimator ein Leuchtpunkt ins Unendliche projiziert, der über Prismen in die einzelnen Sensoren eingespiegelt wird. Dieses Verfahren leidet vor allem durch die beugungsbedingte Größe des Leuchtpunktes. Wenn die Größe des Leuchtpunktes die Bildpunktgröße des FLIR nicht überschreiten soll, müssen der Kollimator und die Prismen etwa dieselben Durchmesser haben wie die Eintrittslinse des FLIR. Da diese Baugröße meistens nicht realisierbar ist, nimmt man einen größeren Punktdurchmesser in Kauf und ermittelt zur Achsharmonisierung dessen Mitte, mit allen daraus entstehenden Ungenauigkeiten.

Durch die DE-PS 33 28 974 ist es beispielsweise bekannt geworden, bei Meßgeräten die Autokollimation zu verwenden. Dazu enthält jeder Sensor ein eigenes beleuchtetes Fadenkreuz, und im Sensor wird die Position des reflektierten Fadenkreuzes mit dem reellen Fadenkreuz zur Deckung gebracht. Wenn das für alle Sensoren durchgeführt wird, sind deren Achsen parallel ausgerichtet. Der Nachteil dabei ist, daß diese Platte verhältnismäßig groß und schwer ist, da ihre Planparallelität unmittelbar in die Genauigkeit der Achsharmonisierung eingeht. Auch der Bewegungsmechanismus für die Platte und der Platzbedarf der ausgeschwenkten Platte bedingen einen zusätzlichen Raumaufwand.

Die bekannten Verfahren nach dem Stand der Technik arbeiten also entweder mit Kollimatoren und haben dadurch besonders im Infrarotbereich Probleme durch Beugungserscheinungen oder sie verwenden zusätzliche einschwenkbare oder einschiebbare Planplatten, die voll-oder teilreflektierend sind.

Der vorliegenden Erfindung liegt die Aufgabe zugrunde, ein Achsharmonisierungsverfahren der eingangs aufgeführten Arten zu schaffen, bei denen die vorgenannten Nachteile beseitigt werden, keine zusätzlichen optischen Elemente mehr erforderlich sind und die bisherigen Probleme im Infrarotbereich aufwandslos gelöst werden.

Diese Aufgabe wird durch die im Anspruch 1 aufgezeigten Maßnahmen gelöst. Die Merkmale des Anspruchs 2 beziehen sich auf ein spezielles Ausführungsbeispiel, und im Unteranspruch ist eine weitere Ausgestaltung angegeben. In der nachfolgenden Beschreibung wird anhand von Ausführungsbeispielen die Erfindung erläutert und in den Figuren der Zeichnung skizziert. Es zeigen:

Fig. 1a und 1b ein Ausführungsbeispiel nach dem Stand der Technik in einer schematischen Skizze;

Fig. 2 ein Ausführungsbeispiel bei einem optischen Visier in schematischer Darstellung;

Fig. 3 ein Ausführungsbeispiel eines aktiven optronischen Gerätes mit Laserentfernungsmesser in schematischer Darstellung.

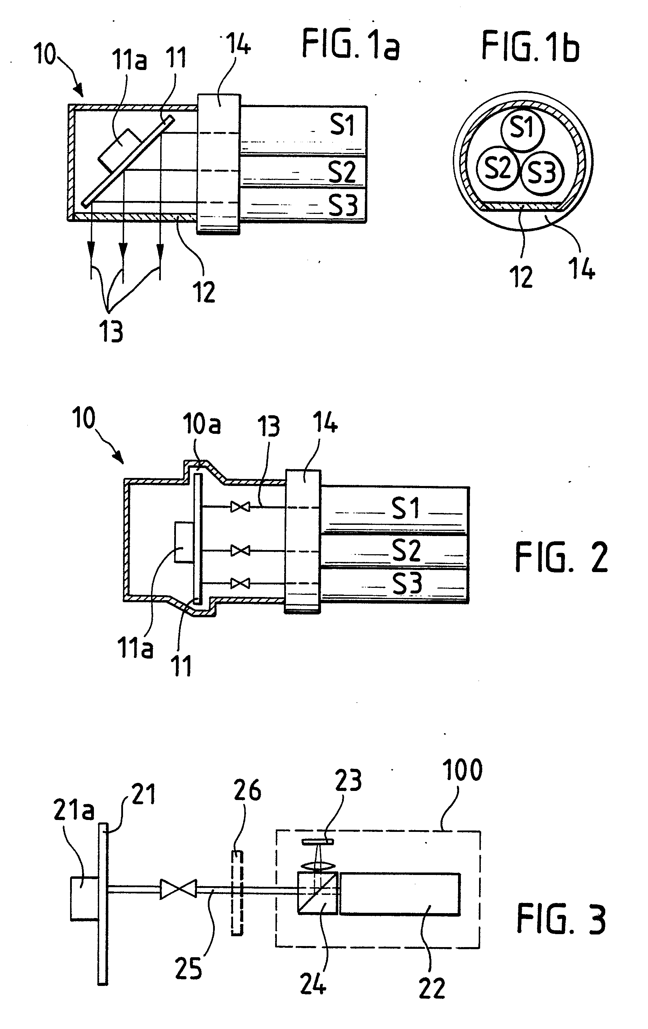

Die Fig. 1a und 1b zeigen ein Visier 10 der üblichen Bauart, bei dem ein von einem Motor 11a angetriebener Richtspiegel 11 die Strahlen 13 der verschiedenen Sensoren S1, S2, S3 etc. aus dem Visierfenster 12 zur weiteren Verarbeitung auslenkt. Hier setzt nun die Erfindung ein und schlägt vor, bei solchen Visieren 10 zur Achsharmonisierung diesen schon im Visier vorhandenen planparallelen Richtspiegel 11 zu verwenden, der allerdings dann in eine Position senkrecht zu den optischen Achsen der Sensoren S1, S2, S3 zu bringen ist und diese Achsen dann in an sich bekannter Weise durch Autokollimation parallel auszurichten. Dies ist in der Fig. 2 schematisch dargestellt.

Ein so ausgebildetes Visier 10 hat keine Probleme mehr mit der Beugung im Infrarotbereich, da durch die Autokollimation die Öffnung des FLIR ausgenutzt wird. Das Gewicht und die Montage der bisher verwendeten zusätzlichen Planplatte wird eingespart, lediglich der Richtantrieb muß geringfügig modifiziert werden. Nur die Gehäuseform des Visiers ist in der Richtspiegelebene mit einer Ausbuchtung 10a zu versehen, da der Richtspiegel um etwa $\sqrt{2}$ größer ist als der Visierdurchmesser.

Bei dem in Fig. 3 gezeigten aktiven optronischen Gerät in Form eines Laserentfernungsmessers 100 kann das vorgeschlagene Verfahren in Verbindung mit einem Winkeldetektor/Quadrantendetektor 23 ebenfalls verwendet werden. Auch hier wird der mit einem Antrieb 21a versehene Richtspiegel 21 in eine senkrechte Position zum Laserstrahl 25 gebracht. Es ist nur sicherzustellen, daß der Laser, der Teilerwürfel 24 und der Quadrantendetektor 23 zu einer stabilen Einheit 100 zusammengefaßt sind. Unter Umständen kann es hier vorteilhaft sein, während der Harmonisierung in den Strahlengang 25 ein Dämpfungsfilter 26 einzuschwenken bzw. einzuschieben.

## Ansprüche

1. Verfahren zur Parallelausrichtung mehrerer optischer Achsen eines optronischen Visiers mit Richt-oder Stabilisierungsspiegel unter Verwendung der Autokollimation, dadurch **gekennzeichnet,** daß zur Achsharmonisierung der im Visier (10) vorhandene planparallele Richtspiegel (11) verwendet wird, der mit seinem Antrieb (11a) in eine Position senkrecht zu den optischen Achsen der Sensoren (S1, S2, S3) eingeschwenkt wird und diese Achsen dann in an sich bekannter Weise durch Autokollimation parallel ausgerichtet werden.

2. Verfahren zur Parallelausrichtung mehrerer optischer Achsen eines aktiven optronischen Gerätes - wie beispielsweise ein Laserentfernungsmesser - mit einem Richt-oder Stabilisierungsspiegel, dadurch **gekennzeichnet,** daß zur Achsharmonisierung der vorhandene planparallele Richtungsspiegel (21) verwendet wird, der mit seinem Antrieb (21a) in eine Position senkrecht zur optischen Achse des Laserentfernungsmessers (22) eingeschwenkt wird und diesem ein Winkeldetektor (23) zugeordnet ist, wobei der Laserentfernungsmesser (22), der Teilerwürfel (24) und der Winkeldetektor (23) zu einer stabilen Einheit (100) zusammengefaßt sind.

3. Verfahren nach Anspruch 2, dadurch **gekennzeichnet,** daß während des Achsharmonisierungsvorganges in den Strahlengang (25) zwischen Richtspiegel (21) und Einheit (100) ein Dämpfungsfilter (26) eingeschwenkt wird.

FIG. 1a    FIG. 1b

FIG. 2

FIG. 3

10 049

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 228 734 (TELECOMMUNICATIONS RADIOELECTRIQUES ET TELEPHONIQUES) * Ansprüche 1,2 in Verbindung mit Zusammenfassung;         Abbildung; Spalte 1, Zeile 44  -  Spalte  2, Zeile 14 * | 2 | G 02 B   27/30 G 02 B   27/62 F 41 G    3/32 |
| A,D | DE-C-3 328 974 (MESSERSCHMITT-BÖLKOW-BLOHM) *  Abbildung  1; Spalte 4, Zeilen 33-45; Ansprüche 3,9 * | 1,2 | |
| A | DE-B-2 722 796 (MESSERSCHMITT-BÖLKOW-BLOHM) * Anspruch 1;  Spalte  1,  Zeilen 47-59; Abbildung * | 1,2 | |
| A | GB-A-2 132 049  (MARCONI AVIONICS LTD.) * Zusammenfassung, Abbildung * | 1,2 | RECHERCHIERTE SACHGEBIETE (Int. Cl.4)<br>G 01 B   11/00<br>G 01 M   11/00<br>G 01 S    3/00<br>G 02 B   27/00<br>F 41 G    1/00<br>F 41 G    3/00 |

Der vorliegende Recherchenbericht wurde für alle Patentansprüche erstellt.

| Recherchenort | Abschlußdatum der Recherche | Prüfer |
|---|---|---|
| BERLIN | 19-10-1987 | HYLLA W.A. |